Europäisches Patentamt

European Patent Office

Office européen des brevets

(11) Publication number: **0 157 281**
A2

(12) **EUROPEAN PATENT APPLICATION**

(21) Application number: **85103164.1**

(22) Date of filing: **19.03.85**

(51) Int. Cl.⁴: **B 60 R 13/06**

(30) Priority: **31.03.84 JP 47644/84 U**

(43) Date of publication of application: **09.10.85**
Bulletin **85/41**

(84) Designated Contracting States: **DE FR GB IT**

(71) Applicant: **Nishikawa Rubber Co., Ltd., 2-8,
Misasa-cho 2-chome Nishi-ku, Hiroshima-shi
Hiroshima-ken (JP)**

(72) Inventor: **Tsujiguchi, Shoichi Nishikawa Rubber Co., Ltd.,
2-8, Misasa-cho 2-chome Nishi-ku, Hiroshima-shi
Hiroshima-ken (JP)**

(74) Representative: **Rasper, Joachim, Dr., Bierstadter
Höhe 22, D-6200 Wiesbaden (DE)**

(54) Motor vehicle window molding.

(57) A window molding for an automobile adapted for conceal-·
ing the gap between a body panel window opening and the
edge of the window glass. The window molding comprises a
trim portion for covering the gap and a leg portion extending
from the trim portion into the gap. The leg portion is adapted to
be embedded in an adhesive for fixing the peripheral edge of
the window glass to the body panel window opening. The trim
portion has an inward extension and the leg portion has a re-
taining projection projecting inwardly towards the window
glass when installed in place. Thus, the window glass is
clamped between the inward extension of the trim portion and
a flat retaining surface of the retaining projection.

# MOTOR VEHICLE WINDOW MOLDING

## BACKGROUND OF THE INVENTION

This invention relates to an improvement of a window molding for a motor vehicle body and more particularly to a window molding for concealing the juncture between a fixed window glass and vehicle body panels.

It is known to conceal the juncture between the window glass and the vehicle body by use of a molding which bridges the space between the body panel and the window glass.

It is also known to attach the molding by the same adhesive which binds the window glass to the body panel. For example, an adhesive bonding strip of uncured butyl rubber and rectangular in cross-section may be employed to attach both the window glass and the molding to the vehicle body. The bonding strip is prefabricated in its rectangular cross-section with one side face thereof covered with a fabric overlay. The fabric overlay prevents undersirable flow of the uncured butyl rubber onto the vision area of the window glass. The bonding strip is deformed during the pressing of the window glass thereagainst and the butyl rubber is caused to flow and substantially fill the recess or space which would exist between the edge of the window glass and the body panel. A flat strip of decorative molding is located over this recess and becomes adhesively secured to the butyl rubber which has filled the recess. It will thus become apparent that the molding strip must be used in combination with a bonding strip, window glass, and body panels which are so predictable in assembled dimensions that the bonding strip will consistently fill the recess between the window glass and body panel and thereby present a continuous surface for adhesive contact against the flat molding strip.

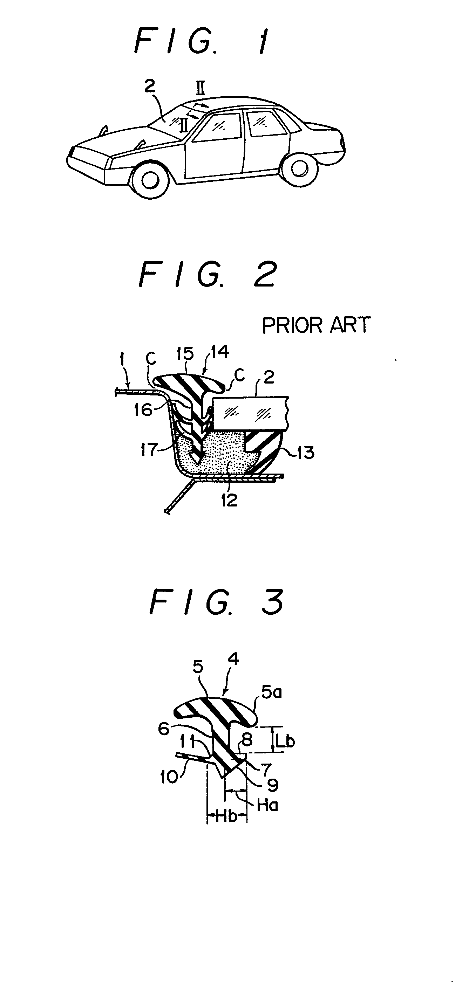

In a conventional molding 14 of this type, as shown in Fig. 2, a trim portion or decorative portion 15 and a leg portion 16 form a generally T shape in section. The leg portion 16 is provided with a plurality of fins 17 at the both ends thereof. A vehicle body window opening panel 1 is provided with a dam rubber 13 for affixing a window glass plate 2 thereto by an adhesive sealant or agent. The molding is mounted to the marginal gap portion of the window glass plate 2 by inserting the leg portion 16 therein. However, in this prior art, there are such inconveniences as that depending on the quantity of the adhesive agent 12 and on the dimensional irregularity of a gap or space defined between the panel 1 and window glass plate 2, the molding 14 is raised, and gaps C are formed between the decorative portion 15, and the panel 1 and the window glass plate 2, respectively.

## SUMMARY OF THE INVENTION

It is therefore an object of the present invention to provide an improved window molding for an automobile which overcomes or at least minimizes the above noted problems of the prior art.

In accordance with an aspect of the present invention, there is provided a window molding for concealing the gap between the edge of a window glass and a peripheral wall of a window opening of a vehicle body, said peripheral wall being formed of a wall flange wich is generally perpendicular to a window glass when mounted in place and a fence flange extending inwardly towards the window glass and in parallel therewith, said window molding comprising: a trim portion for covering a clearance between an edge of said window glass and the wall flange of said peripheral wall, said trim portion having an inward extension projecting inwardly towards the window glass; and a leg portion extending from said trim portion into said clearance in spaced relation to the wall flange of said peripheral wall of said window opening with the end of said leg portion being embedded in an adhesive for fixing a peripheral edge of the window glass to said wall and fence flanges, said leg portion having at the leading end thereof a retaining projection projecting inwardly towards the window glass and a fin projecting outwardly towards the wall flange, said retaining projection having a flat retaining surface for clamping the edge of said window glass between the same and the inward extension of said trim portion and an inclined surface for facilitating insertion of the leg portion into the adhesive, said fin being adapted to bear against the wall flange when the window molding is installed in place.

The above and other objects, features and advantages of the present invention will be readily apparent from the following description taken in conjunction with the accompanying drawings.

## BRIEF DESCRIPTION OF THE DRAWINGS

Fig. 1 is a schematic perspective view of an automobile showing a position to which a window molding is applied;

Fig. 2 is a sectional view taken along the line II-II of Fig. 1 illustrating a prior art window molding;

Fig. 3 is a sectional view of a window molding according to the present invetion;

Fig. 4 is a sectional view of a body panel window opening showing a window glass mounted thereto through a dam rubber;

Fig. 5 is similar to Fig. 2 but showing a window molding of the present invention installed in place; and

Fig. 6 is a sectional view of a window molding according to another embodiment of the present invention.

## DESCRIPTION OF THE PREFERRED EMBODIMENTS

Preferred embodiments of the present invention will be described with reference to drawings. Referring first to Fig. 1, a perspective view of the vehicle body having a fixed window glass mounted thereon is schematically shown.

Referring next to Figs. 3 to 5, reference numeral 1 denotes a vehicle body window opening panel which includes a wall flange 21 which is generally perpendicular to a window glass plate 2 when mounted in place and a fence flange 22 extending inwardly towards the window glass plate 2. The window glass plate 2 is preaffixed to the panel 1 by adhesive sealant or agent. Reference numeral 3 denotes a gap or clearance defined between the panel 1 and the window glass plate 2 and 4 denotes a window molding formed by extrusion molding of synthetic resin material such as a vynil chloride, and formed in a generally T cross sectional shape by a decorative portion or trim portion 5 and a leg portion 6.

Reference numeral 7 denotes a retaining projection projecting from the lower edge of the leg portion 6 toward the window glass plate 2. Said retaining projection 7 is provided with a generally horizontal retaining surface 8 for retaining the window glass plate 2 between an inward trim extension 5a of the trim portion 5 and itself, and with an inclined surface 9 for facilitating the insertion of the leg portion 6 into said gap 3, respectively. The length Lb between the under surface of the inward trim extension 5a and the retaining surface 8 should be equal to the thickness La of the window glass palte 2, or more preferably

La - 0.5 mm $\leq$ Lb $\leq$ La. Also, the horizontal length Ha of the retaining projection 7 is required to be 1.5 mm to 3.0 mm.

Reference numeral 10 denotes a fin projecting from the lower edge of the leg portion 6 toward the side of the panel 1. Said fin 10 is provided at the root thereof with a dimensionally thick portion 11 of a triangle shape in section. The horizontal length Hb between the leading end of the dimensionally thick portion 11 and the leading end of the retaining projection 7 should be equal to the horizontal length Hc of said gap 3, or more preferably Hc - 1 mm $\leq$ Hb $\leq$ Hc.

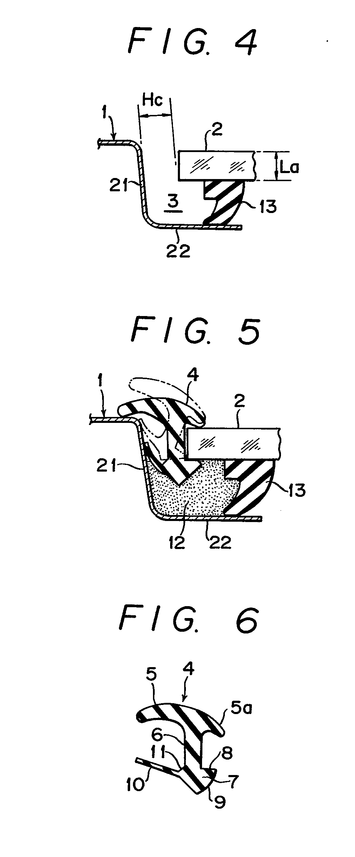

A predetermined amount of the adhesive agent 12 is filled in the gap 3 (the adhesive agent 12 is not shown in Fig. 4), and as shown in Fig. 5, the window molding 4 is pushed into the gap 3 at the leg portion 6 thereof as indicated by broken line. When the leg portion 6 is pushed in, the retaining projection 7 is inserted into the adhesive agent 12 without much resistance by virtue of the inclined surface 9. Also, the window glass plate 2 can be firmly retained between the retaining surface 8 and the inward trim extension 5a as if the window glass plate 2 were deeply thrusted therein.

As described in the foregoing, according to the present invention, the window glass plate 2 is preaffixed to the vehicle body opening portion panel 1. The window molding 4 which is inserted into the gap 3 defined between the panel 1 and the window glass plate 2 is formed into a generally T cross sectional shape by the decorative portion 5 and the leg portion 6.  Said leg portion 6 is provided with the retaining projection 7 projecting from the lower edge thereof toward the window glass palte 2. Said retaining projection 7 is formed with a generally horizontal retaining surface 8 for retaining the window glass plate 2 between the inward trim extention 5a of the trim portion 5 and itself, and with an inclined surface 9 for facilitaing the insertion of the leg portion 6 into said gap 3, respectively.

Therefore, the raising of the window molding after it is mounted can be effectively prevented.  At the same time, the leg portion 6 can be pushed in without much resistance when the window molding is mounted.

Alternatively, the inclined surface 9 may be of an arcuate shape as shown in Fig. 6.

While the invention has been described and shown with particular reference to the preferred embodiments, it will be apparent that variations might be possible that would fall within the scope of the present invention which is not intended to be limited except as. defined in the following claims.

What is claimed is:

1.          In combination, a flexible window molding and a peripheral wall of a window opening of a vehicle body, said peripheral wall being formed of a wall flange which is generally perpendicular to a window glass when mounted in place and a fence flange extending inwardly towards the window glass and in parallel therewith, said window molding comprising;

a trim poriton for covering a clearance between an edge of said window glass and the wall flange of said peripheral wall, said trim portion having an inward extension projecting inwardly towards the window glass; and

a leg portion extending from said trim portion into said clearance in spaced relation to the wall flange of said peripheral wall of said window opening with the end of said leg portion being embedded in an adhesive for fixing a peripheral edge of the window glass to said wall and fence flanges, said leg portion having at the leading end thereof a retaining projection projecting inwardly towards the window glass and a fin projecting outwardly towards the wall flange, said retaining projection having a flat retaining surface for clamping the edge of said window glass between the same and the inward extenstion of said trim portion and an inclined surface for facilitating insertion of the leg portion into the adhesive, said fin being adapted to bear against the wall flange when the window molding is installed in place.

0157281

2. The combination according to claim 1 wherein the distance between the lower face of said inward extension and the retaining surface of said retaining projection is equal to or a little bit smaller than the width of the window glass.

3. The combination according to claim 1 wherein said fin has a thick root portion and a thin end portion and wherein the distance between the leading end of the thick root portion and the inward end of the retaining projection is equal to or a little bit smaller than the distance between the wall flange and the edge of said window glass.

1/2

0157281

FIG. 1

FIG. 2

PRIOR ART

FIG. 3

0157281

# FIG. 4

# FIG. 5

# FIG. 6